# EUROPÄISCHE PATENTSCHRIFT

(11) **EP 1 028 074 B1**
(45) Veröffentlichungstag und Bekanntmachung des Hinweises auf die Patenterteilung: **06.05.2004**
(21) Anmeldenummer: 00102649.1
(22) Anmeldetag: 08.02.2000
(51) Int. Cl.: B65G 1/04

(54) **Lagermagazin**
Storage magazine
Magasin de stockage

(30) Priorität: 10.02.1999 AT 18099
(43) Veröffentlichungstag der Anmeldung: 16.08.2000
(73) Patentinhaber: LTW Lagertechnik GmbH, 6961 Wolfurt (AT)
(72) Erfinder: Malin, Peter, 6900 Bregenz (AT)
(74) Vertreter: Hofinger, Engelbert, Dr.Dr.

(56) Entgegenhaltungen:
- DE-A- 3 435 679
- DE-A- 19 603 660
- GB-A- 1 388 718
- US-A- 4 773 807
- PATENT ABSTRACTS OF JAPAN vol. 007, no. 085 (M-206), 8. April 1983 (1983-04-08) & JP 58 011401 A (DAIFUKU KIKO KK), 22. Januar 1983 (1983-01-22)

## Beschreibung

Die Erfindung bezieht sich auf ein Lagermagazin mit mehreren Hochregalen und zwischen den Hochregalen in Lagergängen angeordneten Fahrschienen für mindestens ein Regalbediengerät mit einem sich auf einem Fahrwerk abstützenden vertikalen Mast, auf dem eine Hubtraverse höhenverfahrbar gelagert ist und mit mindestens einem in den Lagergängen verfahrbaren Transportwagen, wobei anschließend an die Hochregale neben einer Fahrschiene mindestens ein Übergabeplatz für das vorzugsweise auf Paletten abgestellte Lagergut vorgesehen ist und der mindestens eine Transportwagen sowohl in den Lagergängen als auch bis zum Übergabeplatz und am Übergabeplatz verfahrbar ist.

Bei derartigen Lagermagazinen herkömmlicher Art wird das vorzugsweise auf Paletten angeordnete Lagergut mittels des Regalbediengerätes von einer Übergabestelle, die sich beim Eingang des Lagers befindet, abgeholt und dann .zu dem dafür vorgesehenen Lagerplatz in einem der Hochregale transportiert und dort abgelegt. Ebenso wird das Lagergut vom Regalbediengerät aus dem Hochregal wieder entnommen und von diesem zur Übergabestelle gebracht.

Der Nachteil derartiger bekannter Lagersysteme ist darin zu sehen, daß das Regalbediengerät teuer und relativ schwerfällig ist. Dadurch ist das Ein- und Ausladen der Ware relativ teuer und kann nicht so schnell erfolgen, wie es in manchen Fällen notwendig wäre.

Aus der DE-A 34 35 679 ist ein Lagermagazin bekannt, bei dem sowohl Regalbediengeräte (Hubstapler) als auch Transporteinrichtungen für den horizontalen Transport zum Einsatz kommen. Bei den Transporteinrichtungen handelt es sich jedoch entweder um Rollenbahnen oder um Transportwagen, die nicht schienengeführt sind.

Aufgabe der Erfindung ist es, ein Lagermagazin der eingangs erwähnten Art zu verbessern und ein schnelleres und kostengünstigeres Ein- und Ausladen des Lagergutes zu ermöglichen.

Die erfindungsgemäße Aufgabe wird dadurch gelöst, daß der mindestens eine Transportwagen auf den Schienen des Regalbediengerätes verfahrbar ist.

Die Ausbildung des Transportwagens und des Regalbediengerätes als Schienenfahrzeuge erlaubt eine bessere Führung der Fahrzeuge und somit auch höhere Geschwindigkeiten.

Ein Ausführungsbeispiel der Erfindung sieht vor, daß der Transportwagen eine Ladefläche aufweist, die sich zumindestens annähernd auf der Höhe der untersten Etage der Hochregale befindet.

Ein weiteres Ausführungsbeispiel der Erfindung sieht vor, daß mindestens ein Transportwagen eine doppelte Ladefläche aufweist. Dadurch können auf dem Transportwagen zwei Paletten mit Lagergut hintereinander abgesetzt werden.

Um den Transportwagen auch als Rollbahn einsetzen zu können, ist in einem bevorzugten Ausführungsbeispiel der Erfindung vorgesehen, daß der Transportwagen an seiner Ladefläche mit Rollen versehen ist. Dabei können mindestens zwei aneinander gesetzte Transportwagen eine Rollenbahn bilden oder es können im Lagermagazin voneinander in Längsrichtung distanzierte ortsfeste Rollenbahnen vorgesehen sein, die von einem Transportwagen zu einer durchgehenden Rollenbahn ergänzt werden.

Nachfolgend wird ein Ausführungsbeispiel der Erfindung anhand der Figuren der beiliegenden Zeichnungen beschrieben.

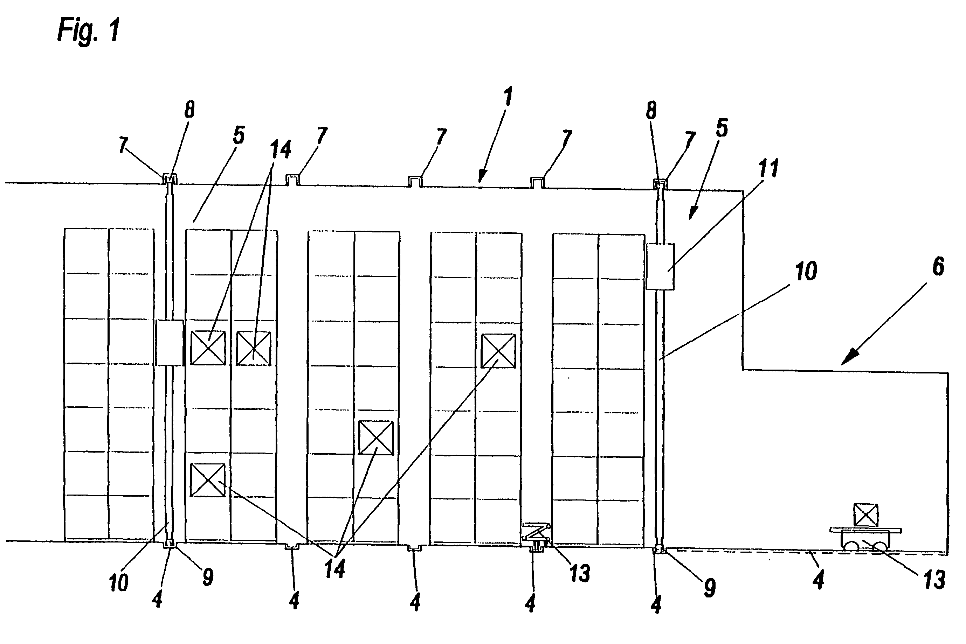

Die Fig. 1 zeigt einen schematisch gehaltenen Aufriß eines erfindungsgemäßen Lagermagazins,

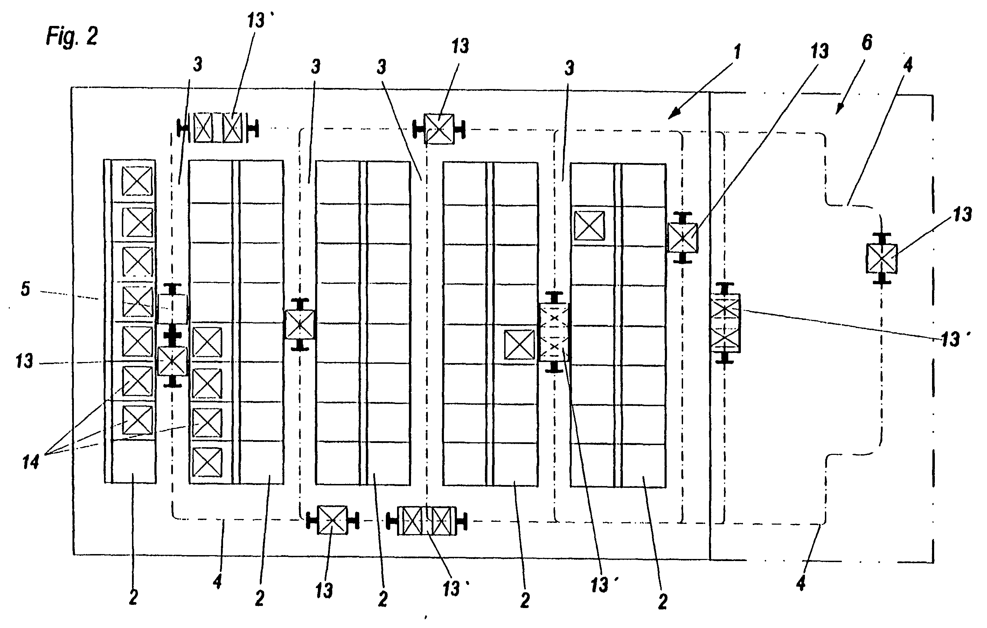

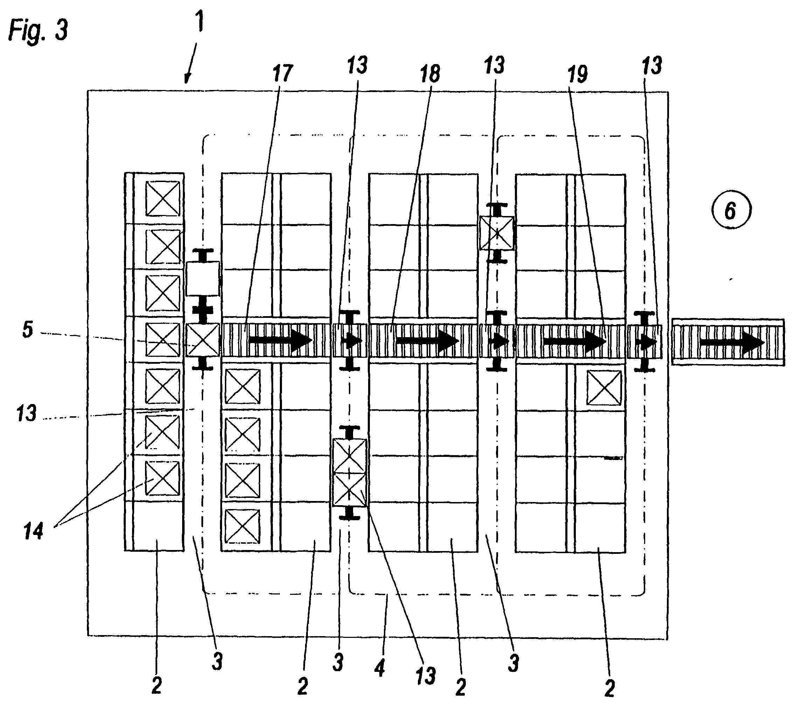

die Fig. 2 zeigt schematisch eine Draufsicht auf ein erfindungsgemäßes Lagermagazin
die Fig. 3 zeigt schematisch eine durch einen erfindungsgemäßen Transportwagen ergänzte Rollenbahn,
die Fig. 4 zeigt einen schematisch gehaltenen Aufriß einer weiteren Variante des erfindungsgemäßen Lagermagazins,
die Fig. 5 zeigt eine Draufsicht auf das Lagermagazin gemäß Fig. 4,
die Fig. 6 bis 8 zeigen den Transportwagen im Aufriß,
die Fig. 9 bis 12 zeigen verschiedene Anordnungen des Regalbediengerätes und des Transportwagens im Aufriß.
die Fig. 13 zeigt die Anordnung der Fig. 12 in Draufsicht,
die Fig. 14 zeigt eine weitere schematische Draufsicht auf ein Regalbediengerät und einen Transportwagen, und
die Fig. 15 zeigt ein weiteres Ausführungsbeispiel eines Regalbediengerätes im Aufriß.

Das erfindungsgemäße Lagermagazin besteht aus dem eigentlichen Lagerraum 1, in dem mehrere Hochregale 2 in Reihen angeordnet sind und mindestens einem anschließenden Übergabegebäude 6. Zwischen den Hochregalen 2 befinden sich Lagergänge 3, die untere Schienen 4 und obere Schienen 7 für ein Regalbediengerät 5 durchlaufen.

Das Übergabegebäude 6, das sich vor dem eigentlichen Lagerraum 1 befindet und das niederer als der Lagerraum 1 ausgeführt ist, dient als Versandgebäude und/oder der Warenannahme.

Das Regalbediengerät 5 ist in herkömmlicher Weise mit einem weiteren unteren Fahrwerk 9, einem Hubmast 10, auf dem eine Hubtraverse 11 verfahrbar ist, und einem oberen Fahrwerk 8 versehen. Der Hubmast 10 ist an seinem oberen Ende ebenfalls in nicht gezeigten Schienen geführt.

Zusätzlich zu dem herkömmlichen Regalbediengerät 5 sind Transportwägen 13, 13' vorgesehen, die ebenfalls auf den Schienen 4 verfahrbar sind, d.h. die Transportwägen 13 sind kurvengängig. Sie können seitlich, d.h. an den Stirnflächen der Hochregale 2 vorbeifahren und dann in den jeweils gewünschten Lagergang 3 einbiegen. Die Transportwägen 13 weisen eine Lagerfläche auf, auf der normalerweise eine Palette abgesetzt werden kann und die sich auf der Höhe der untersten Etage der Hochregale 2 befindet. Die Transportwägen 13' sind mit einer doppelten Ladefläche ausgerüstet, sodaß auf den Transportwagen 13' zwei Paletten mit Lagergut 14 hintereinander abgesetzt werden können. Im gezeigten Ausführungsbeispiel sind die Transportwägen 13, 13' mit je einer Teleskopgabel 12 und/oder einer Drehschubgabel für die Übergabe des auf einer Palette gelagerten Lagergutes 14 versehen.

Das Arbeitsgebiet der Transportwägen 13, 13' umfaßt das gesamte Lagermagazin 1 sowie auch das Übergabegebäude 6.

Das Auslagern des Lagergutes 14 geht beispielsweise wie folgt vor sich:

Die auszulagernde Palette mit dem Lagergut 14 wird vom Regalbediengerät 5 von ihrer jeweiligen Position im Hochregal 2 in die unterste Etage des Hochregales 2 umgelagert. Anschließend verläßt das Regalbediengerät 5 den jeweiligen Lagergang 3.

Der Transportwagen 13 fährt nun in den entsprechenden Lagergang 3 zum Hochregal 2, holt die Palette mit dem darauf gelagerten Lagergut 14 aus der untersten Etage des Hochregals 2 ab und bringt es an den Übergabegebäude 6 beim Versandgebäude. Das Lagergut 14 wird beispielsweise auf einem Rollenband oder direkt in der Vorzone des Übergabegebäudes 6 abgesetzt. Anschließend nimmt der Transportwagen 13 neues Lagergut 14 von der Vorzone mit ins Hochregallager 1.

Es können mehrere Transportwägen 13, 13' vorgesehen sein. Im Ausführungsbeispiel nach der Fig. 3 sind mehrere ortsfeste Rollenbahnen 17, 18, 19 vorgesehen, die quer zu den Lagergängen 3 verlaufen. Die Rollenbahnen 17, 18, 19 erstrecken sich dabei jeweils über die Breite der Hochregale 2 und lassen die Lagergänge 3 frei.

Es ist nun möglich, Transportwägen 13, 13' die an ihrer Lagerfläche mit Rollen versehen sind, wie in der Fig. 3 gezeigt, derart in den Lagergängen 3 zu positionieren, daß die ortsfesten Rollenbahnen 17, 18, 19 durch die Transportwägen 13 zu einer durchgehenden Rollenbahn ergänzt werden. Diese durchgehende Rollenbahn ergibt eine Expreßstrecke vom Regalbediengerät 5 bis zur Übergabestelle 6, wodurch ein sehr flexibler und speditiver Lagerumschlag ermöglicht wird. Die Transportwägen 13 sind dabei mit Rollen versehen, die parallel zu den Rollen der Rollenbahnen 17, 18, 19 ausgerichtet sind.

Alternativ bzw. ergänzend dazu ist es auch möglich, mehrere Transportwägen 13, 13' zu einer Rollenbahn zusammenzusetzen.

Die Transportwägen13, 13' sind an ihren beiden Seiten mit Rädern 16, 20 versehen, wobei die Räder 16 beispielsweise in der Schiene 4 für das Regalbediengerät 5 geführt sind, während die Räder 20 an Stützschienen 21 abrollen.

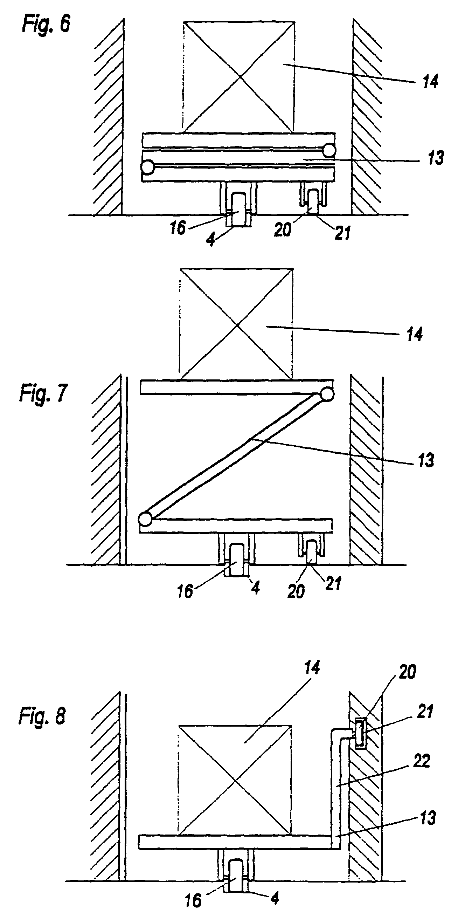

Das Rad oder die Räder 20 können auch an einer seitlich am Transportwagen 13, 13' nach oben ragenden Strebe 22 angeordnet sein. Die Stützschienen 21 sind dabei im Ausführungsbeispiel nach der Fig. 8 vom Boden des Lagerraums distanziert und weisen ein seitlich offenes U-Profil auf.

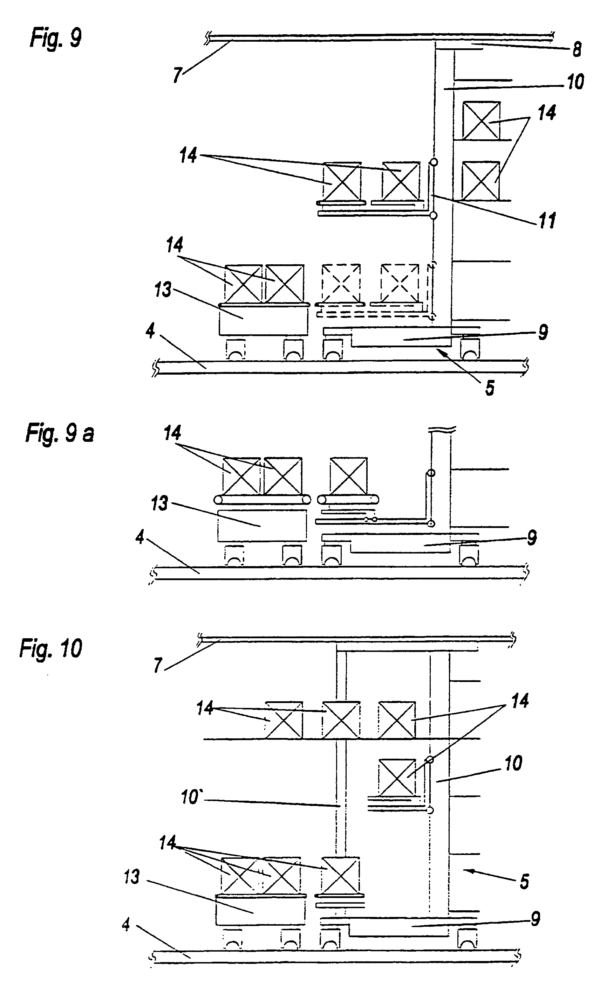

Die Fig. 9 und 10 zeigen zwei Anordnungen, bei denen es möglich ist, Ladegut 14 noch rascher vom Regalbediengerät 5 auf einen Transportwagen 13 abzugeben. Der Transportwagen 13 ist dabei an das Regalbediengerät 5 elektrisch oder mechanisch gekuppelt. Von der Hubtraverse 11 wird dabei das Ladegut 14 aus dem Hochregal 2 entnommen und auf die vorgelagerte Fördereinrichtung abgestellt. Dann holt das Regalbediengerät die nächste Palette mit dem Ladegut und fährt hinunter zum Transportwagen 13, der inzwischen an das Regalbediengerät 5 angedockt wurde. Dann übergibt das Regalbediengerät das Ladegut 14 auf den Transportwagen 13. Anschließend fährt der Transportwagen 13 nun zu seiner Zieladresse, beispielsweise zum Übergabegebäude 6, während das Regalbediengerät 5 einen neuen Auftrag bearbeitet.

Im Ausführungsbeispiel nach der Fig. 10 ist das Regalbediengerät 5 mit zwei Hubmasten 10, 10' versehen, wodurch eine noch schnellere Übergabe des Ladegutes 14 erfolgen kann.

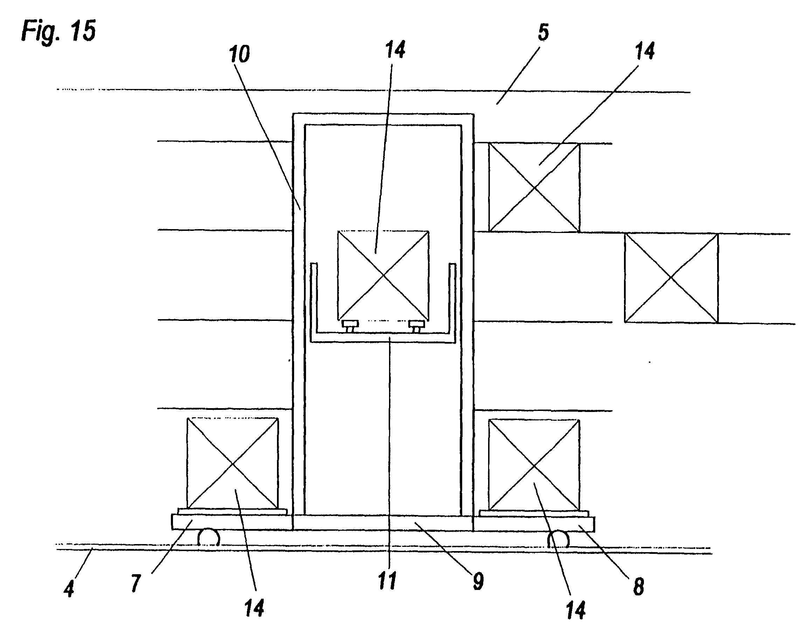

Die Fig. 15 zeigt eine Sonderform eines Regalbediengerätes 5, wobei das Regalbediengerät 5 mit zwei zusätzlichen Palettenabstellplätzen 7, 8 versehen ist. Die Palettenabstellplätze 7, 8 befinden sich vor und hinter der Hubtraverse 11. Ein derartiges Regalbediengerät 5 holt das auf einer Palette abgestellte Ladegut 14 aus dem Hochregal 2 und stellt es an einem bestimmten unteren Palettenplatz im Hochregal 2 ab. Das Regalbediengerät 5 fährt dann einen Platz vor und nimmt das abgestellte Ladegut 14 auf einen der Palettenabstellplätze 7, 8 auf, während die Hubtraverse 11 bereits wieder in die Höhe fährt. Sobald Ladegut 14 auf den letzten Platz 7 oder 8 aufgenommen ist, fährt das Regalbediengerät 5 zum nächsten Ladegut 14 und nimmt dieses auf. Der vorhin beschriebene Vorgang wiederholt sich.

Anschließend fährt das Regalbediengerät 5 zum dritten Ladegut 14 und fährt anschließend mit drei Paletten mit Ladegut 14 zur Übergabestelle 6.

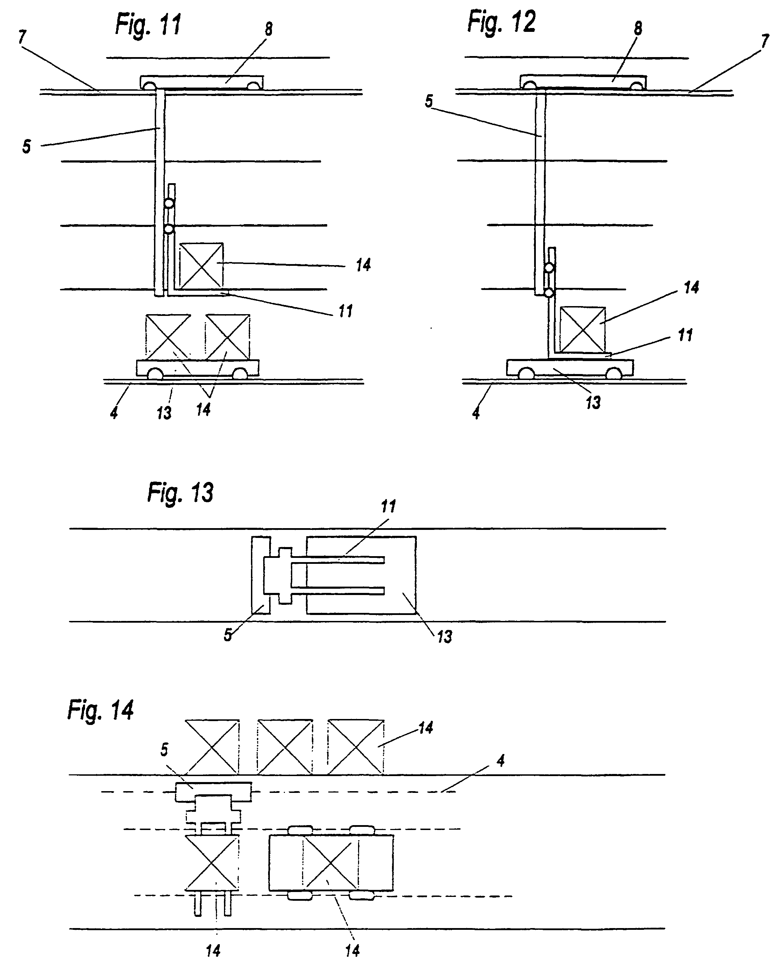

Eine weitere Variante ist in den Fig. 11 bis 14 gezeigt. In diesem Fall wird das Regalbediengerät 5 oberhalb des Transportwagens 13 verfahren. Der Transportwagen 13 kann unbehindert unter dem Regalbediengerät 5 durchfahren oder seitlich am Regalbediengerät vorbeifahren, wenn keine Übergabe eines Lagergutes 14 vom Regalbediengerät 5 auf dem Transportwagen 13 erfolgt. Im Falle des Ausführungsbeispieles nach der Fig. 14 ist der Transportwagen 13 vorteilhaft mit einer Dreheinrichtung für die Palette bzw. das Lagergut 14 versehen, um das Vorbeifahren am Hubmast 10 des Regalbediengerätes zu erleichtern.

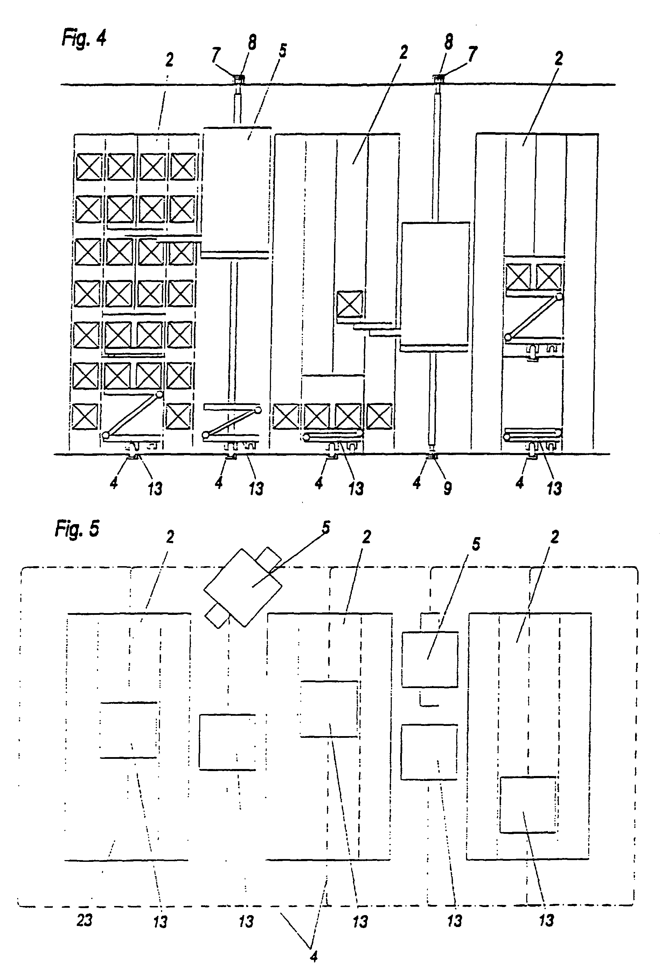

Im Ausführungsbeispiel nach den Fig. 4 und 5 sind wiederum Lagergänge 3 vorgesehen, durch die sowohl das Regalbediengerät 5 als auch ein Transportwagen 13, 13' fahren kann und weitere Lagergänge 23, die nur durch den Transportwagen 13 befahrbar sind.

## Patentansprüche

1. Lagermagazin mit mehreren Hochregalen und zwischen den Hochregalen in Lagergängen angeordneten Fahrschienen für mindestens ein Regalbediengerät mit einem sich auf einem Fahrwerk abstützenden vertikalen Mast, auf dem eine Hubtraverse höhenverfahrbar gelagert ist und mit mindestens einem in den Lagergängen verfahrbaren Transportwagen, wobei anschließend an die Hochregale neben einer Fahrschiene mindestens ein Übergabeplatz für das vorzugsweise auf Paletten abgestellte Lagergut vorgesehen ist und der mindestens eine Transportwagen sowohl in den Lagergängen als auch bis zum Übergabeplatz und am Übergabeplatz verfahrbar ist, **dadurch gekennzeichnet, daß** der mindestens eine Transportwagen (13) auf den Schienen (4) des Regalbediengerätes (5) verfahrbar ist.

2. Lagermagazin nach Anspruch 1, **dadurch gekennzeichnet, daß** der Transportwagen (13) kurvengängig ist.

3. Lagermagazin nach Anspruch 1 oder 2, **dadurch gekennzeichnet, daß** der Transportwagen (13) eine Ladefläche aufweist, die sich zumindestens annähernd auf der Höhe der untersten Etage der Hochregale (2) befindet.

4. Lagermagazin nach einem der Ansprüche 1 bis 3, **dadurch gekennzeichnet, daß** mindestens ein Transportwagen (13') eine doppelte Ladefläche aufweist.

5. Lagermagazin nach einem der Ansprüche 1 bis 4, **dadurch gekennzeichnet, daß** der Transportwagen (13) an seiner Ladefläche mit Rollen versehen ist.

6. Lagermagazin nach Anspruch 5, **dadurch gekennzeichnet, daß** mindestens zwei aneinander gesetzte Transportwagen (13) eine Rollenbahn bilden.

7. Lagermagazin nach Anspruch 5, **dadurch gekennzeichnet, daß** mindestens zwei voneinander in Längsrichtung distanzierte, ortsfeste Rollenbahnen (17,18,19) vorgesehen sind, die von mindestens einem Transportwagen (13) zu einer durchgehenden Rollenbahn ergänzt werden.

8. Lagermagazin nach Anspruch 7, **dadurch gekennzeichnet, daß** die Rollenbahnen quer zu den Lagergängen (3) verlaufen.

9. Lagermagazin nach einem der Ansprüche 1 bis 8, **dadurch gekennzeichnet, daß** der Transportwagen (13) mit einer Teleskopgabel (12) zur Warenübergabe versehen ist.

10. Lagermagazin nach einem der Ansprüche 1 bis 8, **dadurch gekennzeichnet, daß** der Transportwagen (13) mit einer Drehschubgabel versehen ist.

11. Lagermagazin nach einem der Ansprüche 1 bis 10, **dadurch gekennzeichnet, daß** der Transportwagen (13) mit quer zur Fahrtrichtung distanzierten Rädern (19,20) versehen ist, wobei die Räder (19) an einer Seite des Transportwagens (13) in den Fahrschienen (4) für das Regalbediengerät (5) geführt sind und die Räder (20) auf der anderen Seite auf dem Boden oder in separaten Stützschienen (21) abrollen

12. Lagermagazin nach Anspruch 11, **dadurch gekennzeichnet, daß** die Stützschienen (21) mit zur Seite offenem U-Profil ausgeführt sind.

13. Lagermagazin nach einem der Ansprüche 1 bis 12, **dadurch gekennzeichnet, daß** der Transportwagen (13) eine vertikale Strebe (22) mit einem seitlichen Stützrad (20) aufweist, das sich oberhalb der Ladefläche des Transportwagens (13) befindet.

14. Lagermagazin nach einem der Ansprüche 1 bis 13, **dadurch gekennzeichnet, daß** ein Transportwagen (13) mit einem Regalbediengerät (5) mechanisch und/oder elektronisch kuppelbar ist.

15. Lagermagazin nach Anspruch 14, **dadurch gekennzeichnet, daß** das Regalbediengerät (5) zwei Hubmasten (10, 10') aufweist, auf denen zwei Hubschlitten (11) unabhängig voneinander verfahrbar sind.

16. Lagermagazin nach einem der Ansprüche 1 bis 15, **dadurch gekennzeichnet, daß** das Regalbediengerät (5) in Fahrtrichtung zum Hubschlitten (11) versetzt eine weitere Ladefläche (7, 8) aufweist.

17. Lagermagazin nach Anspruch 16, **dadurch gekennzeichnet, daß** das Regalbediengerät (5) vor und hinter dem Hubschlitten (11) je eine Ladefläche (7, 8) aufweist.

18. Lagermagazin nach einem der Ansprüche 1 bis 17, **dadurch gekennzeichnet, daß** Lagergänge (23) vorgesehen sind, die eine obere Begrenzung aufweisen, die niedriger ist als das Regalbediengerät (5) und höher als ein Transportwagen (13) mit Lagergut (14).

19. Lagermagazin nach einem der Ansprüche 1 bis 18, **dadurch gekennzeichnet, daß** der Transportwagen (13) und/oder das Regalbediengerät (5) eine Dreheinrichtung für das Lagergut (14) aufweisen.

20. Lagermagazin nach einem der Ansprüche 1 bis 19, **dadurch gekennzeichnet, daß** der Übergabeplatz, der sich in einem Übergabegebäude (6) befindet, vom Lagerraum (1) für die Hochregale (2) getrennt ist.

## Claims

1. A storage magazine comprising a plurality of high-level shelf units and rails arranged between the high-level shelf units in storage gangways for at least one shelf unit servicing device with a vertical mast which is supported on a chassis and on which a lifting transverse member is supported displaceably in respect of height, and at least one transport trolley which is displaceable in the storage gangways, wherein provided adjacent to the high-level shelf units beside a rail is at least one transfer location for the storage material which is preferably disposed on pallets and the at least one transport trolley is displaceable both in the storage gangways and also to the transfer location and at the transfer location, **characterised in that** the at least one transport trolley (13) is displaceable on the rails (4) of the shelf unit servicing device (5).

2. A storage magazine according to claim 1 **characterised in that** the transport trolley (13) is capable of negotiating a curve.

3. A storage magazine according to claim 1 or claim 2 **characterised in that** the transport trolley (13) has a load surface which is at least approximately at the height of the lowermost tier of the high-level shelf units (2).

4. A storage magazine according to one of claims 1 to 3 **characterised in that** at least one transport trolley (13') has a double load surface.

5. A storage magazine according to one of claims 1 to 4 **characterised in that** the transport trolley (13) is provided with rollers at its load surface.

6. A storage magazine according to claim 5 **characterised in that** at least two transport trolleys (13) which are fitted to each other form a rolling track.

7. A storage magazine according to claim 5 **characterised in that** there are provided at least two stationary rolling tracks (17, 18, 19) which are spaced from each other in the longitudinal direction and which are supplemented by at least one transport trolley (13) to form a continuous rolling track.

8. A storage magazine according to claim 7 **characterised in that** the rolling tracks extend transversely with respect to the storage gangways (3).

9. A storage magazine according to one of claims 1 to 8 **characterised in that** the transport trolley (13) is provided with a telescopic fork (12) for article transfer.

10. A storage magazine according to one of claims 1 to 8 **characterised in that** the transport trolley (13) is provided with a rotary thrust fork.

11. A storage magazine according to one of claims 1 to 10 **characterised in that** the transport trolley (13) is provided with wheels (19, 20) spaced transversely with respect to the direction of travel, wherein the wheels (19) at one side of the transport trolley (13) are guided in the rails (4) for the shelf unit servicing device (5) and the wheels (20) on the other side roll on the ground or in separate support rails (21).

12. A storage magazine according to claim 11 **characterised in that** the support rails (21) are of a U-shaped profile which is open towards the side.

13. A storage magazine according to one of claims 1 to 12 **characterised in that** the transport trolley (13) has a vertical strut (22) with a lateral support wheel (20) which is disposed above the load surface of the transport trolley (13).

14. A storage magazine according to one of claims 1 to 13 **characterised in that** a transport trolley (13) can be mechanically and/or electronically coupled to a shelf unit servicing device (5).

15. A storage magazine according to claim 14 **characterised in that** the shelf unit servicing device (5) has two lift masts (10, 10') on which two lift carriages (11) are displaceable independently of each other.

16. A storage magazine according to one of claims 1 to 15 **characterised in that** the shelf unit servicing device (5) has a further load surface (7, 8) displaced in the direction of travel with respect to the lift carriage (11).

17. A storage magazine according to claim 16 **characterised in that** the shelf unit servicing device (5) has a respective load surface (7, 8) in front of and behind the lift carriage (11).

18. A storage magazine according to one of claims 1 to 17 **characterised in that** there are provided storage gangways (23) having an upper boundary which is lower than the shelf unit servicing device (5) and higher than a transport trolley (13) with storage material (14).

19. A storage magazine according to one of claims 1 to 18 **characterised in that** the transport trolley (13) and/or the shelf unit servicing device (5) has a turning device for the storage material (14).

20. A storage magazine according to one of claims 1 to 19 **characterised in that** the transfer location which is in a transfer building (6) is separate from the storage space (1) for the high-level shelf units (2).

## Revendications

1. Magasin de stockage avec plusieurs rayonnages et des rails de roulement, disposés entre les rayonnages dans des couloirs, pour au moins un gerbeur pourvu d'un mât vertical qui est en appui sur un châssis et sur lequel une traverse de levage est montée mobile en hauteur, et au moins un chariot de transport mobile dans les couloirs, étant précisé qu'il est prévu à la suite des rayonnages, près d'un rail de roulement, au moins un espace de transfert pour les produits stockés déposés de préférence sur des palettes, et que le ou les chariots de transport sont mobiles aussi bien dans les couloirs que jusqu'à l'endroit de transfert et au niveau de celui-ci, **caractérisé en ce que** le ou les chariots de transport (13) sont mobiles sur les rails de roulement (4) du gerbeur (5).

2. Magasin de stockage selon la revendication 1, **caractérisé en ce que** le chariot de transport (13) est apte à décrire des courbes.

3. Magasin de stockage selon la revendication 1 ou 2, **caractérisé en ce que** le chariot de transport (13) présente une surface de chargement qui se trouve au moins approximativement à la hauteur de l'étage inférieur des rayonnages (2).

4. Magasin de stockage selon l'une des revendications 1 à 3, **caractérisé en ce qu'**au moins un chariot de transport (13') présente une surface de chargement double.

5. Magasin de stockage selon l'une des revendications 1 à 4, **caractérisé en ce que** le chariot de transport (13) est pourvu sur sa surface de chargement de rouleaux.

6. Magasin de stockage selon la revendication 5, **caractérisé en ce qu'**au moins deux chariots de transport (13) placés l'un contre l'autre forment un transporteur à rouleaux.

7. Magasin de stockage selon la revendication 5, **caractérisé en ce qu'**il est prévu au moins deux transporteurs à rouleaux (17, 18, 19) fixes, espacés dans le sens longitudinal, qui sont complétés par au moins un chariot de transport (13) pour former un transporteur à rouleaux continu.

8. Magasin de stockage selon la revendication 7, **caractérisé en ce que** les transporteurs à rouleaux s'étendent transversalement par rapport aux couloirs (3).

9. Magasin de stockage selon l'une des revendications 1 à 8, **caractérisé en ce que** le chariot de transport (13) est pourvu d'une fourche télescopique (12) pour le transfert des marchandises.

10. Magasin de stockage selon l'une des revendications 1 à 8, **caractérisé en ce que** le chariot de transport (13) est pourvu d'un fourche rotative et rétractable.

11. Magasin de stockage selon l'une des revendications 1 à 10, **caractérisé en ce que** le chariot de transport (13) est pourvu de roues (16, 20) espacées transversalement par rapport au sens de la marche, les roues (16) étant guidées sur un côté du chariot de transport (13) dans les rails de roulement (4) pour le gerbeur (5) tandis que les roues (20) roulent de l'autre côté sur le sol ou dans des rails de support distincts (21).

12. Magasin de stockage selon la revendication 11, **caractérisé en ce que** les rails de support (21) présentent un profilé en U ouvert sur le côté.

13. Magasin de stockage selon l'une des revendications 1 à 12, **caractérisé en ce que** le chariot de transport (13) comporte un élément vertical (22) avec une roue d'appui latérale (20) qui se trouve au-dessus de la surface de chargement du chariot de transport (13).

14. Magasin de stockage selon l'une des revendications 1 à 13, **caractérisé en ce qu'**un chariot de transport (13) est apte à être accouplé mécaniquement et/ou électroniquement à un gerbeur (5).

15. Magasin de stockage selon la revendication 14, **caractérisé en ce que** le gerbeur (5) comporte deux mâts de levage (10, 10') sur lesquels deux chariots de levage (11) sont mobiles indépendamment l'un de l'autre.

16. Magasin de stockage selon l'une des revendications 1 à 15, **caractérisé en ce que** le gerbeur (5) présente une autre surface de chargement (7, 8), qui est décalée par rapport au chariot de levage (11) dans le sens de la marche.

17. Magasin de stockage selon la revendication 16, **caractérisé en ce que** le gerbeur (5) présente une surface de chargement (7, 8) devant et derrière le chariot de levage (11).

18. Magasin de stockage selon l'une des revendications 1 à 17, **caractérisé en ce qu'**il est prévu des couloirs (23) présentant une limitation supérieure qui se trouve plus bas que le gerbeur (5) et plus haut qu'un chariot de transport (13) avec la charge (14).

19. Magasin de stockage selon l'une des revendications 1 à 18, **caractérisé en ce que** le chariot de transport (13) et/ou le gerbeur (5) présentent un dispositif rotatif pour la charge (14).

20. Magasin de stockage selon l'une des revendications 1 à 19, **caractérisé en ce que** l'endroit de transfert qui se trouve dans un bâtiment de transfert (6) est séparé de l'espace de stockage (1) pour les rayonnages (2).
